**Europäisches Patentamt**

**European Patent Office**

**Office européen des brevets**

(19)

(11) Publication number : **0 438 174 B1**

# EUROPEAN PATENT SPECIFICATION

(12)

(45) Date of publication of patent specification :
**14.12.94 Bulletin 94/50**

(51) Int. Cl.$^5$ : **G10L 3/00**

(21) Application number : **91100591.6**

(22) Date of filing : **18.01.91**

(54) **Signal processing device.**

(30) Priority : **18.01.90 JP 8593/90**
**18.01.90 JP 8594/90**
**13.02.90 JP 33209/90**
**13.02.90 JP 33212/90**

(43) Date of publication of application :
**24.07.91 Bulletin 91/30**

(45) Publication of the grant of the patent :
**14.12.94 Bulletin 94/50**

(84) Designated Contracting States :
**CH DE FR GB LI NL SE**

(56) References cited :
**EP-A- 0 076 687**
**SIGNAL PROCESSING, vol. 15, no. 1, July
1988, pages 43-56, Amsterdam, NL; N. DAL
DEGAN et al.: "Acoustic noise analysis and
speech enhancement techniques for mobile
radio applications"**
**FREQUENZ, vol. 42, nos. 2-3, February-March
1988, pages 79-84, Berlin, DE; K. KROSCHEL:
"Umgebungsgeräuschreduktion bei
Sprachkommunikationssystemen"**

(56) References cited :
**INTERNATIONAL CONFERENCE ON ACOUS-
TICS, SPEECH, AND SIGNAL PROCESSING,
Dallas, Texas, 6th - 9th April 1987, pages
205-208; J.A. NAYLOR et al.: "Techniques for
suppression of an interfering talker in co-
channel speech"**
**ELECTRONICS & COMMUNICATIONS IN
JAPAN, vol. 64, no. 9, September 1981, pages
21-30, Silver Spring, Maryland, US; H.
NAGABUCHI et al.: "Quality improvement of
synthesized speech in noisy speech analysi-
s-synthesis processing"**

(73) Proprietor : **MATSUSHITA ELECTRIC
INDUSTRIAL CO., LTD.**
**1006, Oaza Kadoma**
**Kadoma-shi, Osaka-fu, 571 (JP)**

(72) Inventor : **Kane, Joji**
**4-34, Jingu 1-chome**
**Nara-shi Nara 631 (JP)**
Inventor : **Nohara, Akira**
**10-17, Matsuzonocho**
**Nishinomiya-shi Hyogo 662 (JP)**

(74) Representative : **Patentanwälte Beetz - Timpe -
Siegfried Schmitt-Fumian - Mayr**
**Steinsdorfstrasse 10**
**D-80538 München (DE)**

EP 0 438 174 B1

## Description

The present invention relates to a voice signal processing device of the kind as described in the precharacterizing portion of patent claim 1. Such a voice signal processing device is known from SIGNAL PROCESSING, vol. 15, no. 1, July 1988, pages 43-56, Amsterdam, NL; N. DAL DEGAN et al.: "Acoustic noise analysis and speech enhancement techniques for mobile radio applications".

DESCRIPTION OF THE RELATED ART

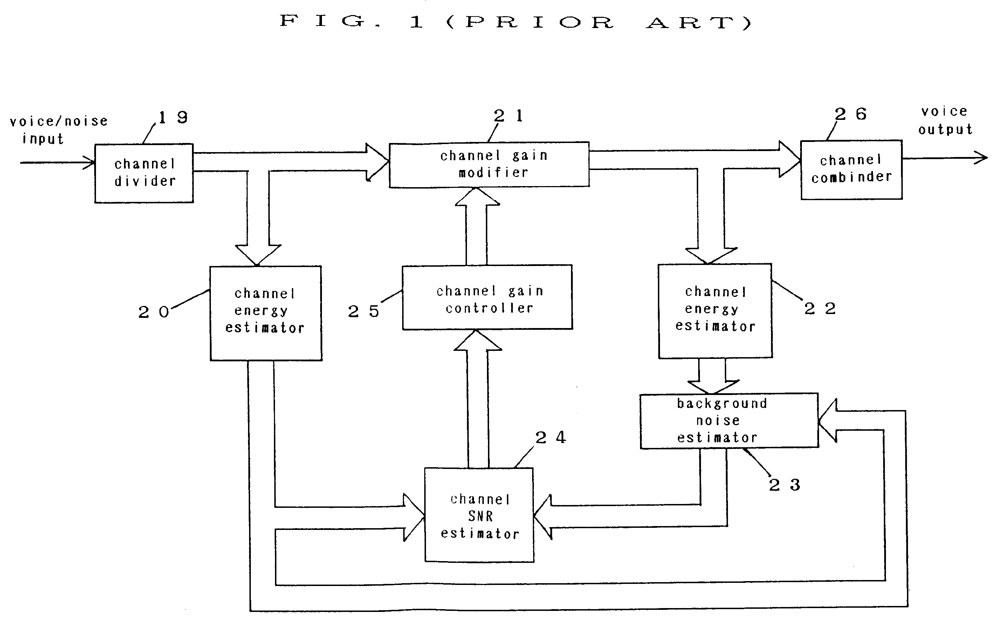

Fig. 1 is a diagram showing the outline of a prior art noise suppression system (Japanese Patent Application Publication No. 63-500543).

In Fig. 1, a voice-plus-noise signal at an input is divided by a channel divider 19 into many selected channels. Then, the gain of these individual pre-processed voice channels is adjusted by a channel gain modifier 21 in response to a modified signal described later so that the gain of the channels exhibiting a low voice-to-noise ratio is reduced. Then, the individual channels comprising the post-processed voice are recombined in a channel combiner 26 to form a noise-suppressed voice signal available at an output.

Also, the individual channels comprising the pre-processed voice are applied to a channel energy estimator 20 which serves to generate energy envelope values for each channel. The post-processed voice is inputted into a channel energy estimator 22. The post-processed estimated channel energy is utilized by a background noise estimator 23 to determine voice/noise.

A channel SNR estimator 24 compares the background noise estimate of the estimator 23 to the channel energy estimate of the estimator 20 to form an SNR estimate. The SNR estimate is utilized to select a specified gain value from a channel gain table comprising experimentally beforehand determined gains. A channel gain controller 25 generates the individual channel gain values of the modified signal in response to the SNR estimate.

However, such prior art noise suppression system adjusts the gain to suppress noise without eliminating noise, so that a sufficiently noise-eliminated signal cannot be obtained.

The above mentioned article from DAL DEGAN et al. discloses a voice signal processing device comprising frequency analysis means for inputting therein a signal of a mingling of a noise and voice, and for frequency-analyzing said signal by a frequency-analysis method to output a frequency-analyzed signal, signal detection means for detecting a first time period containing said voice and noise and a second time period containing only noise, noise predicting means for inputting therein said frequency-analyzed signal to predict noise of said signal of said first time period containing said voice and noise on the basis of a past noise information, and cancel means for subtracting said predicted noise from said frequency-analyzed signal.

It is an object of the present invention to provide a signal processing device for generating a securely noise-eliminated signal by solving the problem of such prior art noise suppression system.

This object is accomplished with a voice signal processing device according to claim 1.

Dependent claims are directed on features of preferred embodiments of the invention.

BRIEF DESCRIPTION OF THE DRAWINGS

Fig. 1  is a block diagram showing a prior art noise suppression system;

Fig. 2  is a block diagram showing an embodiment of a signal processing device according to the present invention;

Fig. 3  is graphs of spectrum and cepstrum in the embodiment;

Fig. 4  is a graph illustrating a noise prediction method in the embodiment;

Fig. 5  is a graph illustrating a cancellation method with the time as a basis in the embodiment;

Fig. 6  is a graph illustrating a cancellation method with the frequency as a basis in the embodiment;

Fig. 7  is a block diagram showing an embodiment of a signal processing device according to another embodiment of the present invention;

Fig. 8  is a block diagram showing an embodiment of a signal processing device according to another embodiment of the present invention;

Fig. 9  is a graph illustrating a cancel coefficient in the embodiment;

Fig. 10  is a block diagram showing an embodiment of a signal processing device according to another embodiment of the present invention;

Fig. 11  is a block diagram showing an embodiment of a signal processing device according to another embodiment of the present invention.

## DESCRIPTION OF THE PREFERRED EMBODIMENTS

With reference to the drawings, embodiments of the present invention will be explained hereinafter.

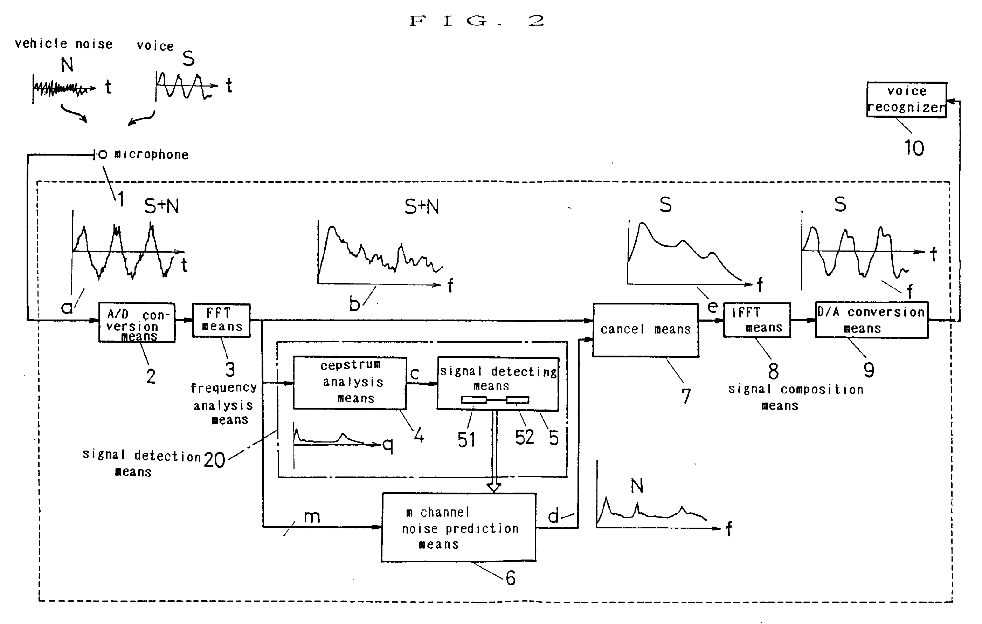

Fig. 2 is a block diagram showing an embodiment of a signal processing device according to the present invention.

Into a microphone 1, usually a noise such as engine sound in addition to voice S is entered. Accordingly, the microphone 1 outputs a voice signal with a mingling of noise(S+N).

A/D (Analog-to-Digital) conversion means 2 converts the voice signal with a mingling of noise being an analog signal to a digital signal.

FFT (Fast Fourier Transformation) means 3 as an example of frequency analysis means performs fast Fourier transformation on the voice signal with a mingling of noise thus converted to the digital signal.

Signal detection means 45 detects a signal portion from the signal with a mingling of noise thus Fourier-transformed. For example, the means 45 is provided with a cepstrum analysis means 4 for cepstrum analyzing the Fourier-transformed signal and signal detecting means 5 for detecting the signal portion utilizing the cepstrum thus analyzed. The term "cepstrum" which is derived from the term "spectrum" is in this application symbolized by $c(\tau)$ and obtained by inverse-Fourier-transforming the logarithm of a short-time spectrum $S(\omega)$.

$$c(\tau) = \sum_{m=0}^{M} \log|S(\omega_n)|^2 \cos(\tau\omega_m)$$

The dimension of $\tau$ is time and $\tau$ (time) is named "quefrency" which is derived from the word "frequency".

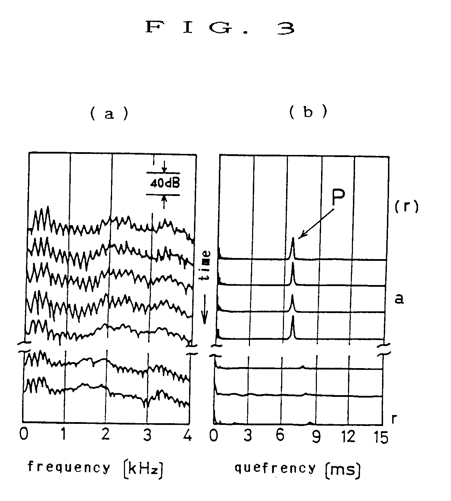

As example the waveforms as shown in Fig. 3 are given. Fig. 3(a) is a short-time spectrum, and Fig. 3(b) is a cepstrum thereof. The signal detecting means 5 detects the signal portion from a noise portion utilizing the cepstrum. As a method of discriminating the signal portion utilizing the cepstrum, for example, a method has been known of detecting the peak of the cepstrum. That is, the method utilizes a peak detection means 51 for detecting the peak of the analyzed cepstrum and signal-noise detection means 52 for discriminating signal on the basis of the peak information thus detected. The P in Fig. 3(b) shows the peak, and the portion in which the peak exists is determined to be a voice signal portion. The peak is detected, for example, in such a manner that a specified threshold has been previously set and the peak value is compared to the threshold.

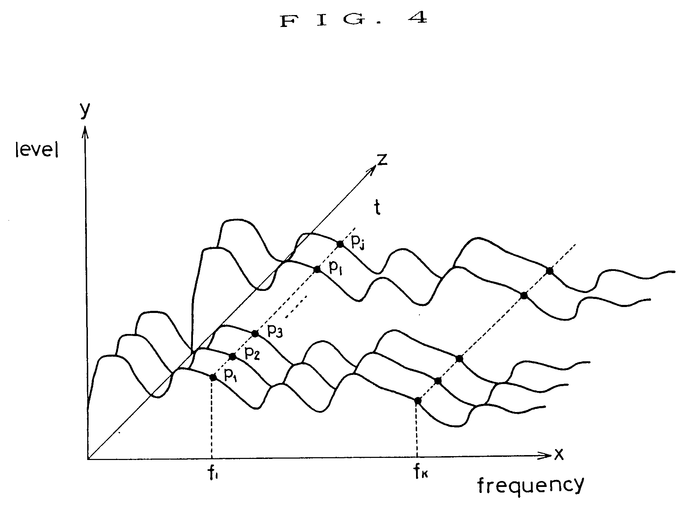

Noise prediction means 6 inputs therein the Fourier-transformed signal with a mingling of noise and predicts the noise in the signal portion on the basis of a past noise information. For example, as shown in Fig. 4, the axis X represents frequency, the axis Y does voice level and the axis Z does time. The data of p1 and p2 through pi at a frequency fl are taken to predict the preceding pj. For example, the mean value of the noise portions p1 through pi is predicted to be pj. Alternatively, when the voice signal portion continues further, the pj is further multiplied by an attenuation coefficient. In the present embodiment, the noise prediction means 6 predicts the noise in the signal portion utilizing the signal portion information detected by the signal detection means 45. For example when the signal portion is detected, the means 45 predicts the noise in the signal portion on the basis of the data of the noise portion at the nearest past when viewed from the point beginning with the signal portion. It is also preferable that the noise prediction means 6 utilizes the signal portion (noise portion) information detected by the signal detection means 45 to accumulate the past noise information.

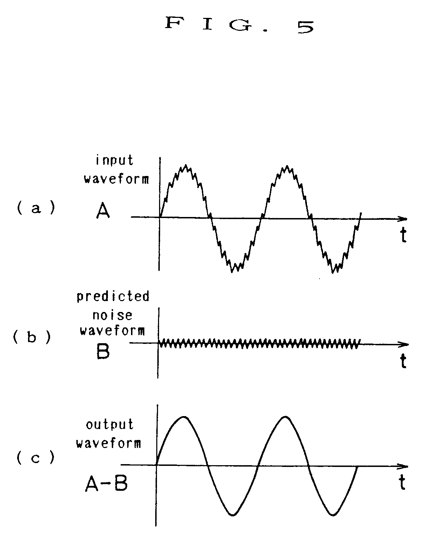

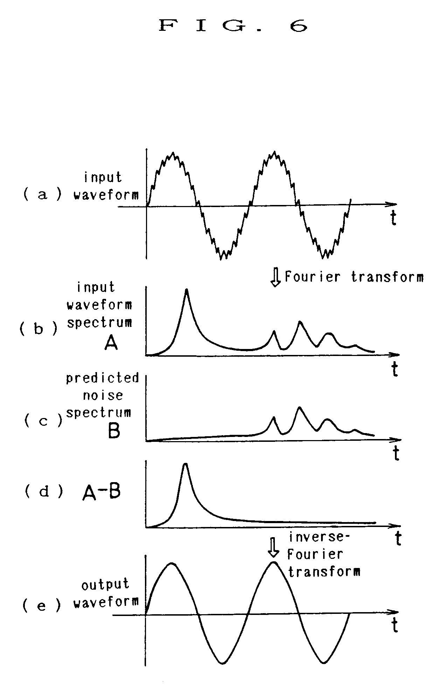

Cancel means 7 subtracts the noise predicted by the noise prediction means 6 from the Fourier-transformed signal with a mingling of noise. For example, the cancellation with the time as a basis is performed in a manner to subtract the predicted noise waveform (b) from the noise-contained voice signal (a) as shown in Fig. 5, thereby allowing only the signal to be taken out (c). Also, as shown in Fig. 6, the cancellation with the frequency as a basis is performed in such a manner that the noise-contained voice signal (a) is Fourier transformed (b), then from the signal thus transformed ,the predicted noise spectrum (c) is subtracted (d), and the remain is inverse Fourier transformed to obtain a voice signal without noise (e). Of course, the portion without signal can be determined to be only noise, so that a signal obtained by inversing the output of the FFT means 3 is generated, and in the portion without signal, the inversed signal is added directly to the output of the FFT means 3 to eliminate completely noise.

IFFT means 8, as an example of signal composition means, inverse-Fourier transforms the noise-eliminated signal obtained by the cancel means 7.

D/A conversion means 9 converts the noise-eliminated voice signal being a digital signal obtained by the IFFT means 8 to an analog signal. The f in FIG.2 indicates the noise-eliminated signal being the analog signal.

A voice recognizer 10 recognizes what word the noise-eliminated voice signal thus obtained is.

3

The operation of the above-described embodiment will be explained hereinafter.

The microphone 1 inputs therein a voice with a mingling of noise and outputs the voice signal with a mingling of noise (S + N) (see Fig. 2, a ). The A/D conversion means 2 converts the voice signal with a mingling of noise being an analog signal to a digital signal. The FFT means 3 performs fast Fourier transformation on the voice signal with a mingling of noise thus converted to the digital signal (see Fig.2, b ).

The signal detection means 45 detects a signal portion from the signal with a mingling of noise thus Fourier transformed. For example, the cepstrum analysis means 4 performs cepstrum analysis on the Fourier-transformed signal. Further, the signal detection means 5 detects the signal portion utilizing the cepstrum thus analyzed (see Fig.2, c ). For example the means 5 detects the peak of the cepstrum to detect signal .

The noise prediction means 6 inputs therein the Fourier-transformed signal with a mingling of noise, takes the data of p1 and p2 through pi at a frequency fl, and calculates the mean value of the noise portions p1 through pi to be made pj. Also, in the present embodiment, the noise prediction means 6 predicts the noise in the signal portion (see Fig. 2, d ) , on the basis of the data of the noise portion at the nearest past when viewed from the point beginning with the signal portion when the signal is detected utilizing the signal portion information detected by the signal detection means 45 .

The cancel means 7 subtracts the noise predicted by the noise prediction means 6 from the Fourier-transformed signal with a mingling of noise (see Fig. 2, e ).

The IFFT means 8 inverse-Fourier transforms the noise-eliminated signal obtained by the cancel means 7.

The D/A conversion means 9 converts the noise-eliminated voice signal being a digital signal obtained by the IFFT means 8 to an analog signal (see Fig.2, f ).

The voice recognizer 10 recognizes what word the noise-eliminated voice signal thus obtained is. Since the signal contains no noise, the recognition rate thereof becomes high.

The noise detection means 6 of the present invention may be such means as to predict the noise component of the signal portion simply on the basis of the past noise information without utilizing the detected signal from the signal detection means 45. For example, the means 6 predicts simply that the past noise continues even in the signal portion.

The present invention also can apply to the processing of other signals with a mingling of noise not limiting to that of voice signal.

Further, the present invention, though implemented in software utilizing a computer, may also be implemented utilizing a dedicated hardware circuit.

As described above, the signal processing device according to the present invention detects a signal portion from a frequency-analyzed signal with a mingling of noise, predicts a noise of the signal portion on the basis of the past noise information, and subtracts the predicted noise from the signal with a mingling of noise, thereby allowing a completely noise-eliminated signal to be generated.

Where noise prediction means 6 uses a signal detected by signal detection means 45 as a trigger to predict a noise of the signal portion, the noise can more accurately predicted, whereby a signal from which the noise is more securely eliminated can be generated.

With reference to the drawings, embodiments of another present invention will be explained hereinafter.

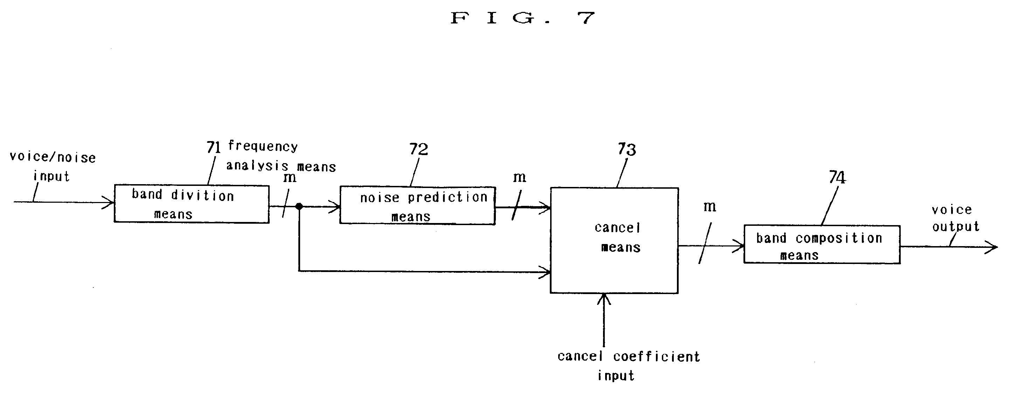

Fig. 7 is a block diagram of a signal processing device in another embodiment of the preset invention. In Fig. 7, the numeral 71 indicates band division means for dividing a voice signal containing noise for each frequency band as an example of frequency analysis means for frequency analyzing a signal, the numeral 72 does noise prediction means for inputting therein the output of the band division means 71 to predict a noise component, the numeral 73 does cancel means for eliminating the noise in a such a manner as described later, and the numeral 74 does band composition means for composing a voice as an example of signal composition means for composing a signal.

The above-described means will be explained in detail hereinafter. The band division means 71 is supplied with a voice containing noise/noise input, performs band division into m-channel frequency bands, and supplies them to the noise prediction means 72 and the cancel means 73. The noise prediction means 72 predicts noise component for each channel on the basis of the voice/noise input divided into m-channels, and supplies them to the cancel means 73. For example, the noise prediction is performed as described previously and as shown in Fig. 4. The cancel means 73 is supplied with a m-channel signal from the band division means 71 and the noise prediction means 72, cancels noise in a manner to subtract the noise for each channel in response to the cancel coefficient input, and supplies them to the band composition means 74. That is, the cancellation is performed by multiplying the predicted noise component by the cancel coefficient. Usually, the cancellation with the time axis as an example of cancel method is performed as described previously and as shown in Fig. 5. Also, as described previously and as shown in Fig. 6, the cancellation with the frequency as a basis is performed. The band composition means 74 composes the m-channel signal supplied from the cancel means 73 to obtain a voice output.

The operation of the signal processing device thus configured in the embodiments of the present invention will be explained hereinafter.

A voice containing noise/noise input is band divided into m-channel signals by the band division means 71, and a noise component thereof is predicted for each channel by the noise prediction means 72. From the signal band-divided into m-channels by the band division means 71, the noise component supplied for each channel from the noise prediction means 72 is eliminated. The noise elimination ratio at that time is properly set so as to improve articulation for each channel by the cancel coefficient input. For example, articulation is improved in such a manner that, where a voice signal exists, the cancel coefficient is made low even if a noise exists so as not to eliminate much the noise. Then, the noise-eliminated m-channel signal obtained by the cancel means 73 is composed by the band composition means 73 to obtain a voice output.

As described above, according to the present embodiment, the noise elimination ratio of the cancel means 73 can be properly set for each band by the cancel coefficient input, and the cancel coefficient is accurately selected according to a voice, thereby allowing an articulation noise-suppressed voice output to be obtained.

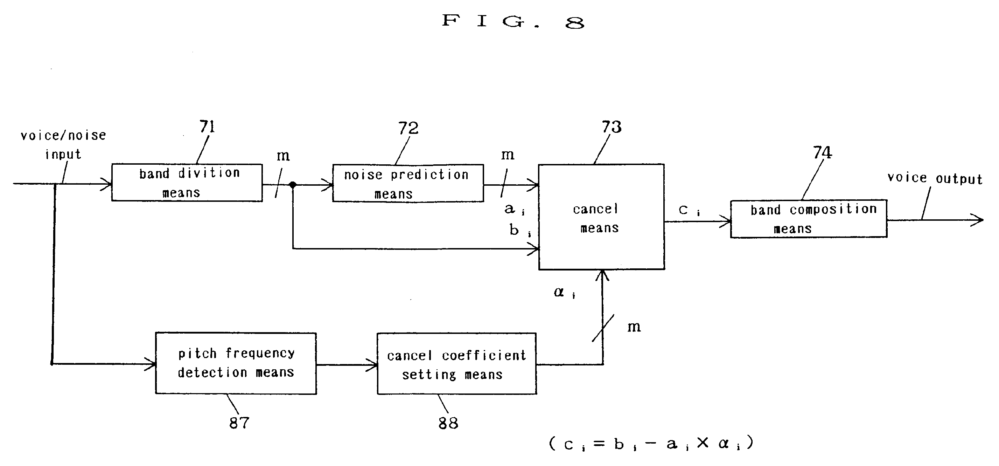

Fig. 8 is a block diagram of a signal processing device in an embodiment of the present invention.

In Fig. 8, the same numeral is assigned to the same means as that of the embodiment in Fig. 7. That is, the numeral 71 indicates band division means, the numeral 72 does noise prediction means, the numeral 73 does cancel means, and the numeral 74 does band composition means. Pitch frequency detection means 87 detects a pitch frequency of the voice of the inputted voice/noise input and supplies it to channel coefficient setting means 88. The pitch frequency of the voice is determined by various method as shown in Table 1 and expresses the presence/absence and characteristic of a voice.

Instead of the pitch frequency detection means 87, another means for detecting voice portion may also be provided. The cancel coefficient setting means 88 is configured in a manner to set a number m of cancel coefficients on the basis of the pitch frequency supplied from the pitch frequency detection means 87 and supply them to the cancel means 73.

The operation of the signal processing device thus configured in the embodiments of the present invention will be explained hereinafter.

A voice containing noise/noise input is band-divided into m-channel signals by the band division means 71, and a noise component thereof is predicted for each channel by the noise prediction means 72. From the signal band-divided into m-channels by the band division means 71, the noise component supplied for each channel from the noise

Table 1

| Classifi-cation | Pitch extraction method | Features |
|---|---|---|
| I Waveform Process-ing | (1) Parallel Processing | Performs decision by majority of pitch periods extracted by 6-class simple waveform peak detector. |
| | (2) Data Reduction | Casts away data other than pitch pulse candidates from waveform data by various logic operations. |
| | (3) Zero Crossing Count | Aims at repeated pattern with respect to number of zero crosses of waveform. |
| II Correla-tion Process-ling | (4) Self-correlation | Self-correlation function of voice waveform and center clip allows spectrum to be smoothed and peak clip allows operation to be simplified. |
| | (5,a) Modified Correlation | Self-correlation function of residuals of LPC analysis, and LPF and polarization of residual signal allow operation to be simplified. |
| | (5,b) SIFT Algorithm | After down sampling voice waveform, performs LPC analysis and smoothes spectrum by inverse filter. Recovers time accuracy by interpolation of correlation function. |
| | (6) AMDF | Detects periodicity by ampli-tude mean difference function (AMDF). Also, allows residual signal to be extracted by AMDF. |
| III Spectrum Process-ling | (7) Cepstrum | Separates envelope and fine structure of spectrum by Fourier transformation of logarithm of power spectrum. |
| | (8) Period Histogram | Determines histogram of higher harmonic of basic frequency on spectrum, and decides pitch by common divisor of higher harmonics. |

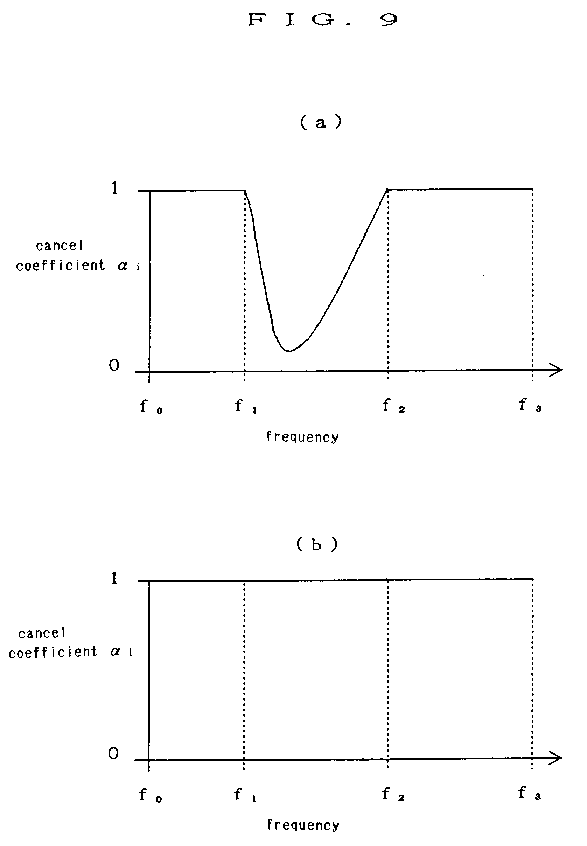

prediction means 72 is eliminated. The noise elimination ratio at that time is set for each channel by the cancel coefficient supplied from the cancel coefficient setting means 88. That is, when the predicted noise component represents $a_i$, signal containing noise $b_i$, and cancel coefficient $alpha_i$, the output $c_i$ of the cancel means 73 becomes $(b_i - alpha_i \times a_i)$. And the cancel coefficient thereof is determined on the basis of the information from the pitch frequency detection means 87. That is, the pitch frequency detection means 87 inputs therein a voice/noise input and detects the pitch frequency of the voice. The cancel coefficient setting means 88 sets cancel coefficients as shown in Fig. 9 . That is, Fig.9(a) shows cancel coefficients at each band, where the $f_0$-$f_3$ indicates the entire band of the voice/noise input. The $f_0$-$f_3$ is divided into m-channels to set the cancel coefficient. The $f_1$-$f_2$ indicates particularly a band containing voice obtained utilizing pitch frequency. Thus, in the voice band, the cancel coefficient is made low (close to zero) to eliminate noise as little as possible, thereby causing articulation to be improved. That is because human acoustic sense can hear a voice even though the voice has a little noise. In the non-voice bands $f_0$-$f_1$ and $f_2$-$f_3$, the cancel coefficient is made 1 to remove sufficiently noise. The cancel coefficient in Fig.9(b) is used when it is firmly found that no voice exists and only

6

EP 0 438 174 B1

noise is considered to exist, and is made 1 to remove sufficiently noise. For example, where no vowel continues to exist from view of peak frequency, the signal cannot be determined to be voice signal, so that the signal is determined to be noise. It is preferable that the cancel coefficient in Fig.9 (a) and (b) can be properly changed over.

The present invention can apply not only to voice signal but also to other signals processing.

Also, the present invention, though implemented in software utilizing a computer, may also be implemented utilizing a dedicated hardware circuit.

As apparent by the above description, the signal processing device according to the present invention comprises noise prediction means for predicting a noise component, cancel means into which a noise-predicted output of the noise prediction means, a frequency analysis output of frequency analysis means and a cancel coefficient signal are inputted and which cancels the noise component considering the cancel ratio from the frequency analysis output, and signal composition means for composing the canceled output of the cancel means, so that, when the noise component is eliminated from a voice containing a noise, the degree of the elimination is properly controlled, thereby allowing the noise to be eliminated and articulation to be improved.

With reference to the drawings, another embodiment of the present invention will be explained.

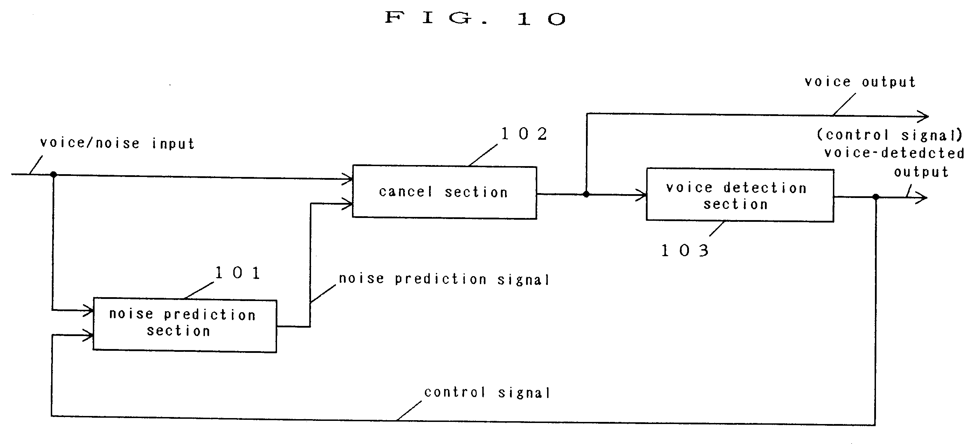

Fig. 10 is a block diagram of a signal processing device in an embodiment of the present invention. The device is configured as shown in Fig. 10. That is, a noise prediction section 101 predicts a noise by a voice/noise input and by a control signal supplied by a voice detection section 103, and supplies a predicted noise to a cancel section 102. The cancel section 102 eliminates the noise from the voice/noise input in response to the predicted noise supplied from the noise prediction section 101 to obtain a voice output, and supplies the voice output to the voice detection section 103. The voice detection section 103 detects the presence/absence of actual voice by the voice output to obtain a voice-detected output, and supplies the voice-detected output as a control signal to the noise prediction section 101.

The operation in the above configuration will be explained. A voice overlapping with noise/noise input is supplied to the cancel section 102 where the noise is eliminated in response to the predicted noise supplied from the noise prediction section 101 to obtain a voice output. The voice/noise input from which the noise is eliminated by the cancel section 102 is supplied to the voice detection section 103 where the presence/ absence of voice is detected to obtain a voice-detected output. Thus, the noise prediction section 101 operates such that the section uses as a control signal the voice-detected output indicating the presence/absence of a voice supplied from the voice detection section 103 to predict the noise of the voice/noise input signal, and supplies the voice-detected signal to the cancel section 102.

Thus, according to the signal processing device in the embodiment of the present invention, voice detection is performed by the signal in which a noise is previously eliminated from a voice/noise input, thereby allowing the presence/absence of a voice to be accurately detected regardless of noise. With such detection, noise prediction can also be performed accurately and the noise is eliminated effectively from the voice/noise input to obtain a clear voice output.

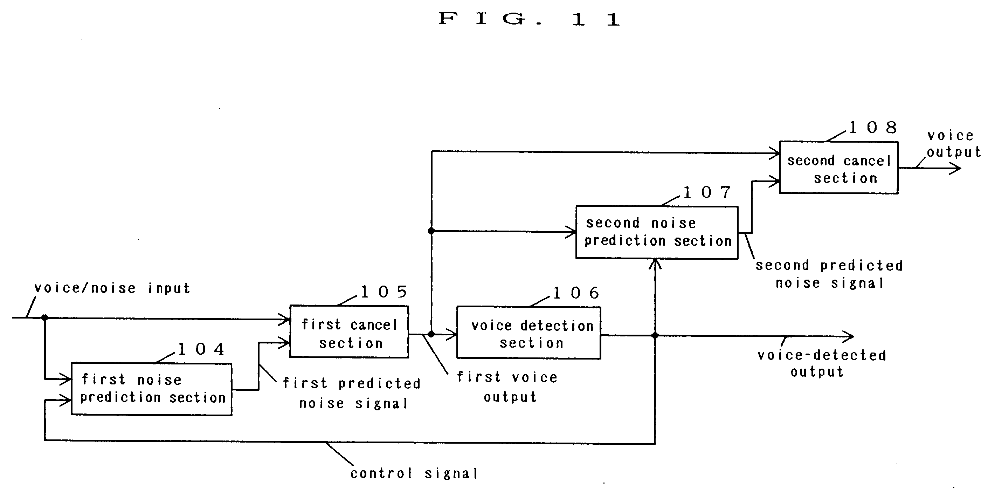

With reference to Fig. 11, an embodiment of another embodiment of the present invention will be explained hereinafter.

Fig. 11 is a block diagram of a signal processing device in an embodiment of the present invention. The device is configured as shown in Fig. 11. That is, a first cancel section 105 eliminates a noise predicted by a first noise prediction section 104 from a voice/noise input, and supplies the noise-eliminated signal to a voice detection section 106, a second noise prediction section 107 and a second cancel section 108. The voice detection section 106 detects the presence/absence of the signal supplied from the first cancel section 105 to obtain a voice-detected output, and supplies the voice-detected output as a control signal to the first noise prediction section 104 and the second noise prediction section 107. The second cancel section 108 eliminates the noise predicted by the second noise prediction section 107 from the signal supplied from the first cancel section 105 to obtain a voice output. The first noise prediction section 104 and the second noise prediction section 107 both use the control signal from the voice detection section 106 to predict the noise of the voice/noise input and to predict the noise of the signal supplied from the first cancel section 105, respectively. Then, the second noise prediction section 107 supplies the predicted-result to the second cancel section 108 which in turn makes the canceled-result a voice output.

The operation in the above configuration will be explained. A voice overlapping with noise/noise input is supplied to the first cancel section 105 where the noise is eliminated in response to a predicted noise supplied from the first noise prediction section 104. A first voice output from which the noise has been previously eliminated by the first cancel section 105 is supplied to the second cancel section 108 where the noise is further eliminated accurately in response to a second predicted noise supplied from the second noise prediction section 107 to obtain a voice output. Also, the first voice output from which the noise has been previously eliminated by the first cancel section 105 is supplied to the voice detection section 106 where the presence/absence is

7

detected to obtain a voice-detected output (control signal). Now, the first noise prediction section 104 uses the control signal indicating the presence/absence of a voice supplied from the voice detection section 106 to predict the noise of the voice/noise input, and supplies a first noise-predicted signal to the first cancel section 105. Further, the second noise prediction section 107 operates such that the section 107 uses similarly the control signal indicating the presence/absence of a voice supplied from the voice detection section 106 to further predict accurately the noise from the first voice output signal from which the noise has been previously eliminated by the first cancel section 105, and supplies the second predicted noise to the second cancel section 108. Thus, according to the signal processing device in the present invention, the presence/absence of a voice can be accurately detected regardless of noise, and the noise is further predicted accurately and eliminated from the first voice output from which the noise has been previously eliminated, thereby allowing a much lower level and rapidly fluctuated unsteady noise to be eliminated.

It is further understood by those skilled in the art that the foregoing description is a preferred embodiment and that various changes and modifications may be made in the invention without departing from the scope thereof.

## Claims

1.  A voice signal processing device comprising:
    - frequency analysis means (3) for inputting therein a signal of a mingling of a noise and voice, and for frequency-analyzing said signal by a frequency-analysis method to output a frequency-analyzed signal,
    - signal detection means (20) for detecting voice signal portions as first time periods containing said voice and noise and noise portions as second time periods containing only noise,
    - noise predicting means (6) for inputting therein said frequency-analyzed signal to predict noise of said signal of said first time period containing said voice and noise on the basis of a past noise information, and
    - cancel means (7) for subtracting said predicted noise from said frequency-analyzed signal,

    **characterized by**

    cepstrum analysis means (4) for performing a cepstrum analysis on said frequency analyzed signal to determine said voice signal portions.

2.  A voice signal processing device in accordance with claim 1, wherein
    the noise prediction means (6) predicts the noise using as a trigger, the first time period being detected by said signal detection means.

3.  A signal processing device in accordance with claim 2, wherein said signal detecting means (5) includes:
    peak detection means (51) for detecting a peak of said analyzed cepstrum; and
    signal-noise detection means (52) for discriminating the first time period on a bais of the peak detected by the peak detection means.

4.  A voice signal processing device in accordance with claim 1, 2, wherein
    said noise prediction means (6) accumulates the noise during the second time period.

5.  A signal processing device in accordance with claim 1, wherein
    said cancel means (73) inputs therein further a cancel coefficient signal, and executes the subtracting considering the cancel coefficient.

6.  A voice signal processing device according to claim 1, comprising:
    band division means (71) for dividing a frequency band of an inputted signal of a mingling of a noise and voice;
    noise prediction means (72) for inputting therein said band-divided output of said band division means (71) to predict a noise component;
    cancel means (73) for inputting therein said predicted noise output of said noise prediction means (72), said band-divided output of said band division means (71) and a cancel coefficient signal to cancel said noise component considering the cancel coefficient from said band-divided output; and
    band composition means (74) for composing said cancelled-output of the cancel means,
    **characterized by**

pitch frequency detection means (87) for detecting a pitch frequency of said inputted signal by using cepstrum information; and

cancel coefficient setting means (88) for setting said cancel coefficient signal in response to said pitch frequency output of said pitch frequency detection means (87).

7. A voice signal processing device according to claim 1 comprising:

a noise prediction section (101) for outputting a predicted noise in an outputted signal of a mingling of a noise and voice;

a cancel section (102) for inputting therein said inputted signal and said predicted noise to obtain a noise-eliminated voice output;

a voice detection section (103) for detecting a presence/absence of a voice from said noise-eliminated voice output to output a control signal corresponding to said presence/absence of the voice; and

said noise prediction section (101) performing noise prediction utilizing said control signal of said voice detection section.

8. A voice signal processing device according to claim 1 comprising:

a first noise prediction section (104) for outputting a first predicted noise in an inputted signal of a mingling of a noise and voice;

a first cancel section (105) into which said inputted signal and said first predicted noise are inputted, to obtain a first noise-eliminated voice output;

a voice detection section (106) for detecting a presence/absence of a voice from said noise-eliminated voice output to output a control signal corresponding to the presence/absence of the voice;

said first noise prediction section (104) performing noise prediction utilizing said control signal of said voice detection section; and further

said device provided with:

a second noise prediction section (107) for outputting a second predicted noise by using said first noise-eliminated voice output and said control signal;

a second cancel section (108) into which said first noise-eliminated voice output and said second predicted noise are inputted to obtain a second noise-eliminated voice output.


**Patentansprüche**

1. Einrichtung zur Sprachsignalverarbeitung mit:
   - einer Frequenzanalyseeinrichtung (3) zum Eingeben eines Signals aus Rauschen und Sprache und zur Frequenzanalyse des Signals mit einem Frequenzanalyseverfahren zur Ausgabe eines frequenzanalysierten Signals,
   - eine Signalerfassungseinrichtung (20) zum Erfassen von Sprachsignalabschnitten als erste Zeitintervalle, die Sprache und Rauschen enthalten, und von Rauschabschnitten als zweite Zeitintervalle, die nur Rauschen enthalten,
   - eine Einrichtung zur Rauschvorhersage (6) zum Eingeben des frequenzanalysierten Signals zur Vorhersage des Rauschens des Signals des ersten Zeitintervalls, das Sprache und Rauschen enthält, auf der Basis einer vorherigen Rauschinformation und
   - eine Löscheinrichtung (7) zum Substrahieren des vorhergesagten Rauschens vom frequenzanalysierten Signal,

   **gekennzeichnet durch**

   eine Cepstrum-Analyseeinrichtung (4) zum Durchführen einer Cepstrum-Analyse des frequenzanalysierten Signals zum Bestimmen der Sprachsignalabschnitte.

2. Einrichtung zur Sprachsignalverarbeitung gemäß Anspruch 1, wobei die Einrichtung zur Rauschvorhersage (6) vorhersagt, indem sie das Rauschen als einen Trigger verwendet, wobei das erste Zeitintervall durch die Signalerfassungseinrichtung erfaßt wird.

3. Einrichtung zur Sprachsignalverarbeitung gemäß Anspruch 2, wobei die Signalerfassungseinrichtung (5)
   - eine Peak-Erfassungseinrichtung (51) zum Erfassen eines Peaks des analysierten Cepstrums und
   - eine Signal-Rausch-Erfassungseinrichtung (52) zum Unterscheiden des ersten Zeitintervalls auf der Basis des von der Peak-Erfassungseinrichtung (51) erfaßten Peaks

   umfaßt.

4. Einrichtung zur Sprachsignalverarbeitung gemäß den Ansprüchen 1, 2, wobei die Einrichtung zur Rauschvorhersage (6) das Rauschen während des zweiten Zeitintervalls aufsummiert.

5. Einrichtung zur Sprachsignalverarbeitung gemäß Anspruch 1, wobei die Löscheinrichtung (73) des weiteren ein Löschkoeffizientensignal erhält und eine Subtraktion unter Berücksichtigung des Löschkoeffizienten durchführt.

6. Einrichtung zur Sprachsignalverarbeitung gemäß Anspruch 1, mit
   - einer Bandteileinrichtung (71) zum Aufteilen eines Frequenzbandes eines eingegebenen Signals, das Rauschen und Sprache enthält,
   - einer Einrichtung zur Rauschvorhersage (72) zum Eingeben des Ausgabesignals mit aufgeteiltem Band der Bandteileinrichtung (71) zur Vorhersage einer Rauschkomponente,
   - einer Löscheinrichtung (73) zum Eingeben des Ausgabesignals mit vorhergesagtem Rauschen von der Einrichtung zur Rauschvorhersage (72), des Ausgabesignals mit aufgeteiltem Band von der Bandteileinrichtung (71) und eines Loschkoeffizientensignals zum Loschen der Rauschkomponente unter Berücksichtigung des Loschkoeffizienten vom Ausgabesignal mit aufgeteiltem Band, und
   - einer Bandbildungseinrichtung (74) zum Zusammenstellen der gelöschten Ausgabe der Löscheinrichtung,

   **gekennzeichnet durch**
   - eine Erfassungseinrichtung der Tonhöhenfrequenz (87) zum Erfassen einer Tonhöhenfrequenz des eingegebenen Signals unter Verwendung der Cepstrum-Information und
   - eine Einstelleinrichtung der Löschkoeffizienten (88) zum Einstellen des Löschkoeffizientensignals in Abhängigkeit von der Tonhöhenfrequenz-Signalausgabe der Erfassungseinrichtung der Tonhöhenfrequenz (87).

7. Einrichtung zur Sprachsignalverarbeitung gemäß Anspruch 1, mit
   - einer Einrichtung zur Rauschvorhersage (101) zum Ausgeben eines vorhergesagten Rauschens in einem ausgegebenen Signal, das Rauschen und Sprache enthält,
   - einer Löscheinrichtung (102) zum Eingeben dieses eingegebenen Signals und des vorhergesagten Rauschens, um ein Sprachausgabesignal zu erhalten, bei dem das Rauschen eliminiert ist,
   - einer Spracherfassungseinrichtung (103) zum Erfassen des Vorhandenseins/Nichtvorhandenseins von Sprache im Sprachausgabesignal mit eliminiertem Rauschen zur Ausgabe eines dem Vorhandensein/Nichtvorhandensein von Sprache entsprechenden Steuersignals und wobei
   - die Einrichtung zur Rauschvorhersage (101) eine Rauschvorhersage unter Verwendung des Steuersignals der Spracherfassungseinrichtung (103) durchführt.

8. Einrichtung zur Sprachsignalverarbeitung gemäß Anspruch 1, mit
   - einer ersten Einrichtung zur Rauschvorhersage (104) zur Ausgabe eines ersten vorhergesagten Rauschens in einem eingegebenen Signal, in dem Rauschen und Sprache enthalten sind,
   - einer ersten Löscheinrichtung (105), der zum Erhalten eines ersten Sprachausgabesignals, aus dem das Rauschen eliminiert ist, das eingegebene Signal und das erste vorhergesagte Rauschen eingegeben werden,
   - einer Spracherfassungseinrichtung (106) zum Erfassen des Vorhandenseins/Nichtvorhandenseins von Sprache im Sprachausgabesignal, aus dem das Rauschen eliminiert ist, zur Ausgabe eines dem Vorhandensein/Nichtvorhandensein von Sprache entsprechenden Steuersignals,
   - wobei die erste Einrichtung zur Rauschvorhersage (104) eine Rauschvorhersage durchführt, indem sie das Steuersignal der Spracherfassungseinrichtung verwendet, und
   - wobei die Einrichtung mit
   - einer zweiten Einrichtung zur Rauschvorhersage (107) zur Ausgabe eines zweiten vorhergesagten Rauschens ausgestattet ist, wobei das erste Sprachausgabesignal, aus dem das Rauschen eliminiert ist, und das Steuersignal verwendet werden,
   - einer zweiten Löscheinrichtung (108), in die zum Erhalten eines zweiten Sprachausgabesignals, aus dem das Rauschen eliminiert ist, das erste Sprachausgabesignal, aus dem das Rauschen eliminiert ist, und das zweite vorhergesagte Rauschen eingegeben werden.

**Revendications**

1. Dispositif de traitement d'un signal vocal comprenant :
   - des moyens d'analyse de fréquence (3) destinés à y entrer un signal d'un mélange de bruits et de voix, et à effectuer une analyse de fréquences de ce signal par un procédé d'analyses de fréquences pour émettre un signal de fréquences analysées,
   - des moyens de détection de signal (20) destinés à détecter des portions de bruits des premières périodes de temps contenant la voix et le bruit et des secondes périodes de temps ne contenant que le bruit,
   - des moyens de prédiction de bruit (6) destinés à y entrer le signal analysé en fréquence pour prédire le bruit de ce signal de la première période de temps contenant la voix et le bruit sur la base d'une information de bruit ancien, et
   - des moyens d'annulation (7) destinés à soustraire le bruit prédit à partir du signal de fréquences analysées,

   **caractérisé par,**
   des moyens d'analyse de cepstre (4) pour réaliser une analyse de cepstre sur le signal de fréquences analysées pour déterminer les portions de signal de voix.

2. Dispositif de traitement de signal de voix selon la revendication 1, dans lequel
   les moyens de prédiction de bruit (6) prédisent le bruit en utilisant comme déclenchement la première période de temps détectée par les moyens de détection de signal.

3. Dispositif de traitement de signal selon la revendication 2, dans lequel les moyens de détection de signal (5) comprennent :
   des moyens de détection de pic (51) pour détecter un pic du cepstre analysé, et
   des moyens de détection de bruit de signal (52) pour distinguer ou discriminer la première période de temps sur la base du pic détecté par les moyens de détection de pic.

4. Dispositif de traitement de signal de voix selon la revendication 1 ou 2, dans lequel
   les moyens de prédiction de bruit (6) accumulent le bruit pendant la seconde période de temps.

5. Dispositif de traitement de signal selon la revendication 1, dans lequel les moyens d'annulation (73) y introduisent de plus un signal de coefficient d'annulation et effectuent la-soustraction en faisant entrer en ligne de compte le coefficient d'annulation.

6. Dispositif de traitement de signal de bruit selon la revendication 1, comprenant :
   des moyens de division de bande (71) destinés à diviser une bande de fréquence d'un signal entré d'un mélange de bruit et de voix ;
   des moyens de détection de bruit (72) pour y introduire le signal de sortie de bandes divisées des moyens de division de bande (71) pour prédire une composante bruit ;
   des moyens d'annulation (73) pour y introduire le signal de sortie de bruit prédit des moyens de prédiction de bruit (72), le signal de sortie de bandes divisées des moyens de division de bande (71) et un signal de coefficient d'annulation pour annuler la composante bruit en faisant entrer en ligne de compte le coefficient d'annulation à partir du signal de sortie de bandes divisées, et
   des moyens de composition de bandes (74) pour composer le signal de sortie annulé des moyens d'annulation,
   **caractérisé par**
   des moyens de détection de fréquence audible (87) pour détecter une fréquence audible du signal entré en utilisant l'information de cepstre ; et
   des moyens de fixation du coefficient d'annulation (88) pour fixer le signal de coefficient d'annulation en réponse au signal de sortie de fréquence audible des moyens de détection de fréquence audible (87).

7. Dispositif de traitement de signal vocal selon la revendication 1, comprenant :
   une section de prédiction de bruit (101) pour émettre un bruit prédit dans un signal émis d'un mélange de bruit et de voix ;
   une section d'annulation (102) pour y introduire le signal entré et le bruit prédit pour obtenir un signal de sortie de voix avec élimination du bruit ;
   une section de détection de voix (103) pour détecter la présence ou l'absence d'une voix à partir d'un signal de sortie de voix où le bruit a été éliminé pour émettre un signal de commande correspondant à la présence/absence de la voix ; et

une section de prédiction de bruit (101) effectuant une prédiction de bruit en utilisant le signal de commande de la section de détection de voix.

8. Dispositif de traitement de signal de voix selon la revendication 1, comprenant :

une première section de prédiction de bruit (104) pour émettre un premier bruit prédit dans un signal entré d'un mélange de bruit et de voix ;

une première section d'annulation (105) dans laquelle le signal entrée et le premier bruit prédit sont entrés pour obtenir un premier signal de sortie de voix dont le bruit a été éliminé ;

une section de détection de voix (106) pour détecter une présénce/absence de voix à partir du signal de sortie de voix dont le bruit a été éliminé pour émettre un signal de commande correspondant à la présence/absence de la voix ;

cette première section de prédiction de bruit (104) effectuant une prédiction de bruit en utilisant le signal de commande de la section de détection de voix ; et de plus,

ce dispositif étant équipé de :

une seconde section de prédiction de bruit (107) pour émettre un second bruit prédit en utilisant le premier signal de sortie de voix dont le bruit a été éliminé et le signal de commande ;

une seconde section d'annulation (108) dans laquelle le premier signal de sortie de voix dont le bruit a été éliminé et le second bruit prédit sont introduits pour obtenir un second signal de sortie de voix dont le bruit a été éliminé.

# F I G . 1 ( P R I O R  A R T )

voice/noise input

channel divider `19`

channel gain modifier `21`

channel combinder `26`

voice output

channel energy estimator `20`

channel gain controller `25`

channel energy estimator `22`

channel SNR estimator `24`

background noise estimator `23`

EP 0 438 174 B1

13

F I G . 2

vehicle noise voice
N S

microphone 1 S+N

A/D conversion means 2

FFT means 3
frequency analysis means

S+N

cepstrum analysis means 4

signal detecting means 5
51 52

signal detection means 20

m channel noise prediction means 6

cancel means 7

S

IFFT means 8
signal composition means

D/A conversion means 9

S

voice recognizer 10

F I G . 3

( a )    ( b )

40dB

P    (r)

time

frequency [kHz]    quefrency [ms]

F I G .  4

F I G . 5

(a)  input
waveform
A

(b)  predicted
noise
waveform
B

(c)  output
waveform
A−B

F I G . 6

(a) input waveform

⇓ Fourier transform

(b) input waveform spectrum A

(c) predicted noise spectrum B

(d) A−B

⇓ inverse- Fourier transform

(e) output waveform

F I G . 7

voice/noise
input

71 frequency
analysis means
m

| band division |
| means |

72

| noise prediction |
| means |

m

73

| cancel |
| means |

m

74

| band composition |
| means |

voice
output

cancel coefficient
input

voice/noise
input

**71**
band divition
means

m

**72**
noise prediction
means

m

$a_i$

$b_i$

**73**
cancel
means

$c_i$

**74**
band composition
means

voice output

$\alpha_i$

m

**87**
pitch frequency
detection means

**88**
cancel coefficient
setting means

$( c_i = b_i - a_i \times \alpha_i )$

EP 0 438 174 B1

F I G . 9

( a )

( b )

EP 0 438 174 B1

F I G . 1 0

voice output

voice/noise input

102

cancel section

(control signal)
voice-detedcted
output

voice detection
section

103

101

noise prediction signal

noise prediction
section

control signal

# F I G . 1 1

EP 0 438 174 B1

```
voice/noise input

        first noise          104
     prediction section

                                   first cancel      105
                                      section

                                   first predicted
                                   noise signal        first voice
                                                         output

                                                    voice detection   106
                                                       section

                                        second noise         107
                                     prediction section

                                              second predicted
                                              noise signal

                                  second cancel   108      voice
                                     section               output

                                              voice-detected
                                              output

              control signal
```